# EUROPEAN PATENT SPECIFICATION

(11) **EP 0 686 010 B1**
(45) Date of publication and mention of the grant of the patent: **08.04.1998**
(21) Application number: 94910510.0
(22) Date of filing: 22.02.1994
(51) Int. Cl.: A47J 41/02, B01J 20/04

(54) **INSULATING VACUUM JACKET SUITABLE FOR THERMAL VESSELS CONTAINING LIQUIDS AND IN PARTICULAR AQUEOUS AND/OR ORGANIC LIQUIDS**
ISOLIERTEN VAKUUMMANTEL GEEIGNET FÜR FLÜSSIGKEIT-ENTHALTENDE THERMOFLASCHEN, INSBESONDERS FÜR WASSER UND/ODER ORGANISCHE FLÜSSIGKEITEN
CHEMISE ISOLANTE SOUS VIDE POUR RECIPIENTS CALORIFUGES CONTENANT DES LIQUIDES, NOTAMMENT DES LIQUIDES AQUEUX ET/OU ORGANIQUES

(30) Priority: 24.02.1993 IT MI930356
(43) Date of publication of application: 13.12.1995
(73) Proprietor: SAES GETTERS S.P.A., I-20151 Milano (IT)
(72) Inventor: BOFFITO, Claudio, Rho (IT); FERRARIO, Bruno, Rescaldina (IT)
(74) Representative: Adorno, Silvano
(86) International application number: PCT/IT94/00016
(87) International publication number: WO 94/18876

(56) References cited:
- EP-A- 0 464 475
- GB-A- 921 273
- US-A- 4 886 240

## Description

The invention relates to an insulating vacuum jacket suitable for thermal vessels containing liquids and in particular aqueous and/or organic liquids like coffe, tea, warm milk, broth, juices, alcoholics and beverages like wine or beer, refreshments or chilled soft drinks and other beverages needing to be kept a long time at a temperature higher or lower than room temperature. Other examples of a liquid of this kind may be the solutions or the suspensions (for instance of aqueous or hydroalcoholic nature) of pharmaceutical and/or biological products, of samples of antifreeze products, of particular compounds of radioisotopes and so on. As a matter of principle, the jacket according to the invention can be used also for DEWAR vessels and for other cyogenic devices (for instance insulated pipings), provided there is no presence of liquid hydrogen.

British patent 921,273 teaches to insulate vessels containing non-aqueous liquids, for instance liquid oxygen or nitrogen, by means of a vacuum jacket, made from glass or metal, containing a combination of palladium oxide (PdO) with a material selected from zeolites, charcoal and silica gel, showing sorption activity with respect to hydrogen.

The purpose of said combination was to maintain a long time the desired vacuum level in the insulating jacket, by sorption of the residual gases, already present in the jacket since the beginning (or generated in a subsequent time) by degassing of the jacket's walls or consequently to leaks through the same walls. Said residual gases are mainly hydrogen, carbon monoxide, carbon dioxide and water.

Zeolites however have a limited sorption capacity with respect to carbon dioxide (and a practically null capacity with respect to carbon monoxide and hydrogen) and if the temperature of the aqueous liquid (for instance coffee) is higher than the outer temperature, also the sorption capacity with respect to water is poor; furthermore, the activation of zeolites requires a prolonged heat treatment, thus rendering their exploitation very far from cheap, especially on occasion of a mass-use. That is why, until now, no vacuum bottle (thermos) was ever employed for the aqueous liquids when containing said combinations.

The replacement of zeolites by charcoal and/or silica gel does not involve any appreciable improvement.

Italian patent 1,191,114, granted to the Applicant, suggested to replace said combinations, based on palladium oxide, by particular alloys based on zirconium, allowing a slight improvement just in the presence of aqueous liquids in a vacuum bottle. Even such alloys, however, do not have a high sorption capacity with respect to water vapour and to the other residual gases, requiring moreover a high activation temperature (573 K or even more). Furthermore, in such cases, in order to minimize the gas load, the thermos has to undergo, during the manufacturing step, a prolonged heat treatment under pumping.

The drawbacks hereinabove have now overcome by the Applicant, which discovered a pretty good combination based on palladium oxide, to be inserted into the insulating jackets of the vacuum bottles.

In its broadest aspect, the invention relates to an insulating vacuum jacket, suitable for thermal vessels containing aqueous and/or organic liquids, and in particular for the so-called thermos, containing as the sorption material for the residual gases present in the jacket, essentially consisting or hydrogen, carbon monoxide, carbon dioxide and water, exclusively a combination of palladium oxide (PdO) and barium oxide (BaO). Palladium oxide can be optionally replaced, in a partial or complete way, by ruthenium oxide, rhodium oxide, osmium oxide, iridium oxide or silver oxide.

Palladium oxide (or the other oxides of noble metals) can be used as such or in a supported form; the carrier may be consisting for instance of alumina, silica, silicalites or titanium-silicalites, having a surface area from 10 to 600 m²/g (pore diameter = from 0,5 to 100 nanometer) and the combination to be placed in the jacket may be in the form of a powder or in the form of pellets, granules, rings, Berl saddles and so on.

According to a particular embodiment, there is first prepared in aqueous solution of a water-soluble palladium salt, for instance chloride or nitrate, and then the carrier, for instance alumina, may be impregnated by means of a predetermined technique, e.g. by the soaking technology or by the so-called dry impregnation, namely a technology according to which the volume of the impregnating solution is equal to or lower than the overall volume of the carrier's pores. A precipitation is then achieved by means of an alkaline solution (preferably from pH 7 to pH 12) and the reaction mixture is filtered and brought to dryness at a temperature lower than 500°C. The thus obtained powder (granulometry = from 0.5 to 200 micrometer) is then admixed with barium oxide in the form of a powder (granulometry = from 0.5 to 500 micrometer) and optionally with traces of binders and/or lubricating agents; then the mixture is compressed into pellets which are loaded into the thermally insulating jackets to be evacuated.

The attached drawings are supplied for merely illustrative purposes and do not limit in any case the scope and the spirit of the invention:
FIGURE 1 is the cross-section of a thermos having an insulating jacket according to the present invention;
FIGURE 2 is the layout of a method for evacuating said jacket;
FIGURES 3, 4 and 5 do report a few of the results ensuing the tests of the examples.

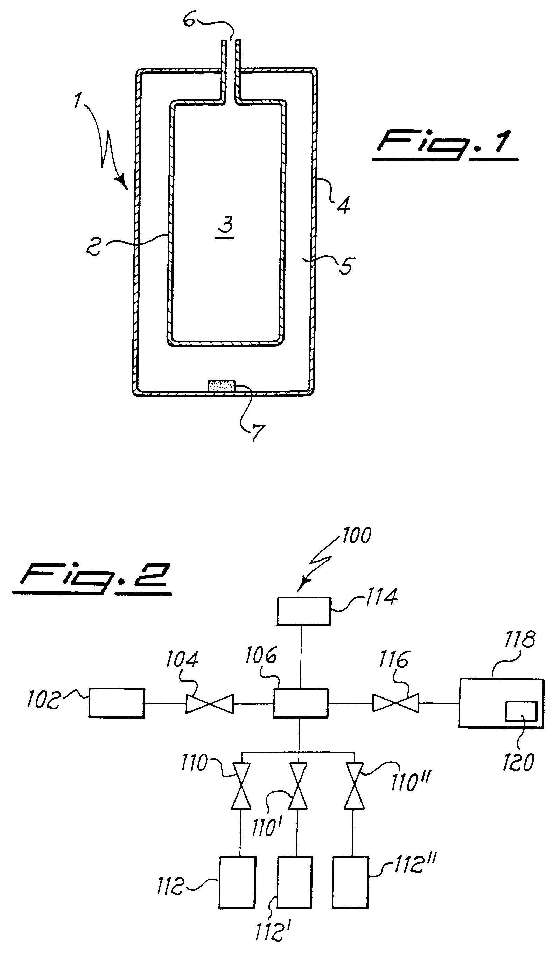

Following Fig. 1, a thermos 1 is consisting of an inner cylindrical vessel 2, made from metal or glass, defining an inner volume or useful space 3, suitable for containing aqueous liquids and in particular hot or chilled beverages, in communication with the outside by means of a neck 6, normally closed but not sealed. An external wall or mantel (shell) 4 defines, together with the wall of the vessel 2, a jacket (interspace) 5 under vacuum; this jacket during the evacuation, in the manufacturing phase of the thermos, is in communication with a vacuum pump not recorded on the drawing. The interspace pressure, once the pumping is over, is normally equal to or lower than 5 x 10⁻³ mbar and preferably from 10⁻⁴ to 10⁻⁶ mbar, when no insulating material is present. Should the interspace contain insulating material, the maximum allowable pressure may be higher, for instance a pressure up to 0.1 mbar. The combination of (optionally supported) PdO and of BaO (7), according to a weight ratio PdO/BaO approximately comprised between 1 : 1 and 1 : 1000 (preferably from 1 : 2 to 1: 200) is arranged in contact with the mantel 4. Optionally the new combinations (e.g. BaO + PdO) may be contained in a thermoretractable housing, of the type described in US patent 5,191,980.

The following examples are supplied for merely illustrative purposes and do not limit in any case and in any way the scope and the spirit of the invention.

### Example 1 (conditions common to examples 2 and 3)

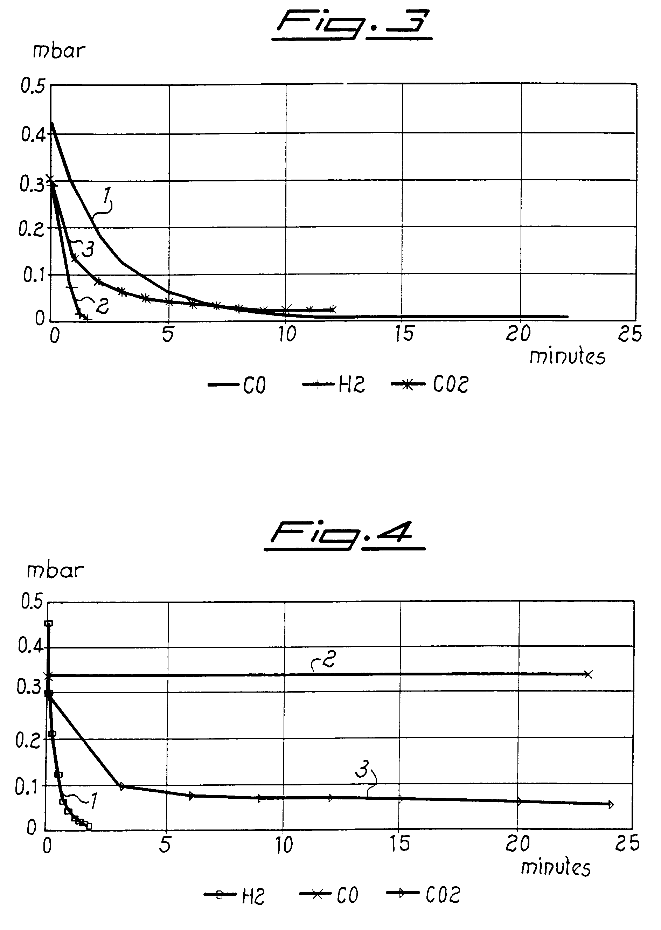

An apparatus suitable for measuring the gas-sorption properties of the sorbing materials according to the present invention is recorded on Fig. 2.

Such figure shows, in a schematical way, a device 100 measuring the sorption features of mixtures of BaO and PdO as well as of other comparison mixtures.

A vacuum pumping system 102 is connected to a metering volume 106 by means of a first valve 104. A series of second valves 110, 110', 110'' is connected to said metering volume, in order to allow the inlet of test gases, coming from a series of test flasks 112, 112', 112'' respectively containing H₂, CO₂ and CO, as well as a pressure gauge 114. A test flask 118, containing the specimen 120 to be tested is connected to the metering volume 106 by means of a third valve 116.

During the test run, valves 110, 110', 110'' and 116 are closed and valve 114 was open, whereas the vacuum pumping system 102 decreased the system pressure down to 10⁻⁶ mbar.

Metering volume 106 had a capacity of about 0.8 liter for each performed test. Apparatus 100 was connected, through (closed) valve 116, to a specimen 120 contained in a test gas flask 118 having approximately a volume of 0.3 liter, under an inert argon atmosphere.

During the tests valve 116 was opened and the system was once more evacuated, down to 10⁻⁶ mbar, while the specimen was kept about 100°C for 15 minutes, which was simulating a cycle similar to the ones which can be encountered by the adsorbing combination, and then the specimen was allowed to cool to room temperature. Valves 104 and 116 were then closed and the test gas, coming from the gas flask 112, (112', 112''), was allowed to flow into the metering volume 106 for a short period of time. Pressure was recorded on gauge 114 and controlled as to be approximately between 0.2 and 0.5 mbar, after opening valve 116, bringing a metered amount of test gas into contact with specimen 120.

### Example 2

One gram of barium oxide, in the form of a powder and having a granulometry lower than 125 micrometer, was admixed with 2 g of granules (average size lower than 600 micrometer) of palladium oxide supported by porous alumina, the PdO title being 2% b.w.

The specimen was then connected to the testing apparatus of Example 1. Then a first metered amount of gas, in this case carbon monoxide (from flask 112, by means of valve 110) was brought into contact with the specimen.

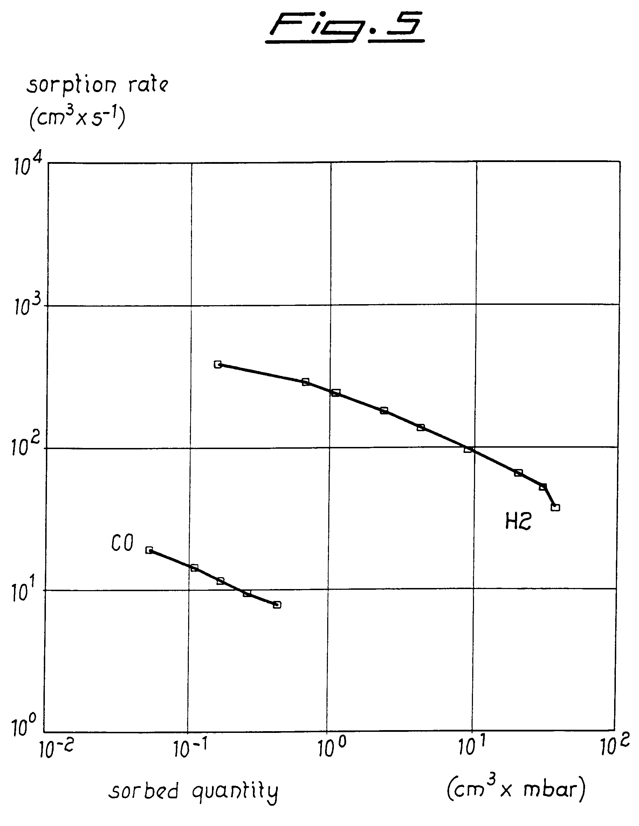

Pressure, in the vessel, was measured as a function of time by means of instrumentation 114; the resulting plot was recorded on Fig. 3 as line 1.

Successively, other metered amounts of other gases (H₂, CO₂ and so on) were allowed to sequentially flow through the specimen, following the same procedural pattern.

The corresponding lines, showing the pressure trend along with the time, are respectively recorded on Fig. 3 as lines 2 and 3.

In each case the specimen did show higher sorption features, either in terms of sorption velocity or in terms of sorption capacity, with respect to the sorption materials of the prior art.

### Example 3 (comparative)

This example shows the behaviour of a conventional material, like the ones generally exploited for the realization of an evacuated interspace in view of a thermal insulation.

One gram of synthetic zeolites, of the 13X class (pore diameter = 1 nanometer), in the form of (cylindrical) pellets having a 1/8" diameter (3.2 mm) supplied by Davidson Chemicals Co., were admixed with 40 mg of palladium oxide, in the form of a powder, having a granulometry lower than 125 micrometer.

The specimen (118) was then connected to the testing apparatus of Example 1. The procedure of Example 2 was then followed, by exposing the specimen to successive metered amounts of gas, in the order hydrogen, carbon monoxide and carbon dioxide. The corresponding lines, showing the pressure trend along the time, are respectively recorded, on Fig. 4, as lines 1, 2 and 3.

The results of such tests point out sorption features which can be measured only in the case of hydrogen and CO₂. In the case of carbon monoxide (line 1) no pressure reduction was registered from a practical point of view.

### Example 4

Approximately 500 mg of barium oxide, in the form of a powder showing a granulometry lower than 125 micrometer, were admixed with 250 mg of granules (average size lower than 600 micrometer) consisting of palladium oxide, supported on porous alumina, and having a PdO content equal to 2% b.w. The mixture was then loaded into a system like the one described by ASTM-F-798-82, concerning the standards allowing to determine the gettering degree, the sorption capacity and the gas concentration in non-evaporable getters (NEG) in the field of the molecular flow.

After having submitted the system to degassing under pumping, at about 150°C for 7 h, and after having allowed the specimen to cool to room temperature (ca. 25°C), the sorption tests were started by admitting first hydrogen to the specimen and subsequently carbon monoxide. Both the tests were carried out by maintaining a constant pressure on the specimen, equal to 4 x 10⁻⁵ mbar. The thus obtained sorption lines are recorded on Fig. 5.

## Claims

1. An insulating jacket under vacuum, suitable for thermal vessels containing liquids, and in particular aqueous and/or organic liquids, containing, as a material sorbing the residual gases present in said jacket, prevailingly consisting of hydrogen, carbon monoxide, carbon dioxide and water, exclusively a combination of barium oxide (BaO) with palladium oxide (PdO) and/or with another oxide of a noble metal selected from ruthenium, rhodium, osmium, iridium and silver.

2. A jacket according to claim 1, wherein said oxide of palladium or of other noble metal is in a supported form.

3. A jacket according to claim 1, wherein said noble metal oxide, different from palladium oxide, is ruthenium oxide.

4. The jacket of claim 2, wherein the carrier is selected from alumina, silica, silicalites and titanium-silicalites, and wherein the surface area of the carrier is from 10 to 600 m²/g (pore diameter from 1 to 100 nanometer).

5. The jacket of claim 2, wherein said combination is present in the form of a powder.

6. The jacket of claim 2, wherein said combination is present in a form selected from pellets, granules, rings and Berl saddles.

7. The jacket of claim 2, wherein said supported palladium oxide is present in a form obtained from the aqueous solution of a water soluble palladium salt, in particular chloride or nitrate, by precipitation by means of an alkaline solution in the presence of the carrier.

8. A method for the preparation of the combination contained in the jacket according to claim 7, wherein said carrier, in the form of a powder, is first impregnated by the aqueous solution of a palladium salt, according to the dry impregnation technique, wherein the thus impregnated powder is treated by means of an alkaline solution, and wherein the resulting product is filtered, dried, converted into a powder and finally admixed with a BaO powder, the ensuing mixture being then compressed into pellets or granules.

9. The method of claim 8, wherein said carrier is alumina and wherein the weight ration PdO : BaO is from 1 : 1 and 1 : 200.

10. A thermal vessel suitable for containing liquids, thermally insulated by means of the jacket of claim 2.

## Patentansprüche

1. Wärmeisolierende Vakuumummantelung, die für Thermogefäße geeignet ist, welche insbesondere wässrige und/oder organische Flüssigkeiten, enthaltend als Material zur Sorption von in der Ummantelung vorliegenden Restgasen, die hauptsächlich aus Wasserstoff, Kohlenmonoxid, Kohlendioxid und Wasser bestehen, ausschließlich eine Kombination von Bariumoxid (BaO) mit Palladiumoxid (PdO) und/oder mit einem anderen Oxid eines Edelmetalls, ausgewählt aus Ruthenium, Rhodium, Osmium, Iridium und Silber enthält.

2. Ummantelung nach Anspruch 1, worin das Palladiumoxid oder Edelmetalloxid auf einem Träger vorliegt.

3. Ummantelung nach Anspruch 1, worin das von Palladiumoxid verschiedene Edelmetalloxid Rutheniumoxid ist.

4. Ummantelung nach Anspruch 2, worin der Träger ausgewählt ist aus Aluminiumoxid, Siliciumdioxid, Sillicaliten und Titan und worin die Oberfläche des Trägers 10 bis 600 m²/g (Porendurchmesser 1 bis 100 nm) beträgt.

5. Ummantelung nach Anspruch 2, worin die Kombination in Form eines Pulvers vorliegt.

6. Ummantelung nach Anspruch 2, worin die Kombination in einer Form, ausgewählt aus Pellets, Granulaten, Ringen oder Perlen vorliegt.

7. Ummantelung nach Anspruch 2, worin das trägergebundene Palladiumoxid in einer Form vorliegt, die aus einer wässrigen Lösung eines wasserlöslichen Palladiumsalzes, insbesondere eines Chlorids oder Nitrats, durch Fällen mittels einer alkalischen Lösung in Gegenwart des Trägers erhalten wurde.

8. Verfahren zur Herstellung der in der Ummantelung enthaltenen Kombination nach Anspruch 7, worin der Träger zunächst in Pulverform gemäß der Trockenimprägnierungstechnik mittels einer wässrigen Lösung eines Palladiumsalzes imprägniert, das derart imprägnierte Pulver mit einer alkalischen Lösung behandelt und das daraus erhaltene Produkt gefiltert, getrocknet, in Pulver überführt und schließlich mit einem BaO-Pulver zumischt und die dabei entstehende Mischung zu Kügelchen oder Granulat gepreßt wird.

9. Verfahren nach Anspruch 8, worin der Träger Aluminiumoxid ist und das Gewichtsverhältnis PdO:BaO 1:1 bis 1:200 beträgt.

10. Zur Aufnahme von Flüssigkeiten geeignetes Thermogefäß, das durch eine Ummantelung nach Anspruch 2 thermisch isoliert ist.

## Revendications

1. Une chemise isolante sous vide pour récipients calorifugés contenant des liquides, notamment des liquides aqueux et/ou organiques, contenant, en tant que matière de sorption des gaz résiduels présents dans ladite enveloppe, lesquels se composent de manière prédominante d'hydrogène, de monoxyde de carbone, de dioxyde de carbone et d'eau, exclusivement une combinaison d'oxyde de baryum (BaO) avec de l'oxyde de palladium (PdO) et/ou avec un autre oxyde d'un métal noble choisi parmi le ruthénium, le rhodium, l'osmium, l'iridium et l'argent.

2. Une chemise selon la revendication 1, dans laquelle ledit oxyde de palladium ou d'un autre métal noble est sur un support.

3. Une chemise selon la revendication 1, dans laquelle ledit oxyde de métal noble, différent de l'oxyde de palladium, est l'oxyde de ruthénium.

4. La chemise de la revendication 2, dans laquelle le support est choisi parmi l'alumine, la silice, les silicalites et les silicalites de titane, et dans laquelle la surface du support est de 10 à 600 m²/g (diamètre des pores de 1 à 100 nanomètres).

5. La chemise de la revendication 2, dans laquelle ladite combinaison se présente sous la forme d'une poudre.

6. La chemise de la revendication 2, dans laquelle ladite combinaison se présente sous une forme choisie parmi des pastilles, des granules, des anneaux et des sellettes de Berl.

7. La chemise de la revendication 2, dans laquelle ledit oxyde de palladium sur un support est présent dans une forme obtenue à partie de la solution aqueuse d'un sel de palladium soluble dans l'eau, en particulier un chlorure ou un nitrate, par précipitation au moyen d'une solution alcaline on présence du support.

8. Un procédé pour la préparation de la combinaison contenue dans la chemise selon la revendication 7, dans lequel ledit support, sous la forme d'une poudre, est tout d'abord imprégné de la solution aqueuse d'un sel de palladium, selon la technique d'imprégnation sèche, dans lequel la poudre ainsi imprégnée est traitée au moyen d'une solution alcaline, et dans lequel le produit résultant est filtré, séché, converti en une poudre et finalement mélangé avec une poudre de BaO, le mélange résultant étant ensuite comprimé sous la forme de pastilles ou de granules.

9. Le procédé de la revendication 8, dans lequel ledit support est de l'alumine et dans lequel le rapport pondéral PdO : BaO est de 1:1 à 1:200.

10. Un récipient calorifugé pour contenir des liquides thermiquement isolés au moyen de la chemise de la revendication 2.
